Europäisches Patentamt

European Patent Office

Office européen des brevets

(19)

(11) EP 0 701 734 B1

(12) FASCICULE DE BREVET EUROPEEN

(45) Date de publication et mention
de la délivrance du brevet:
**10.09.1997 Bulletin 1997/37**

(21) Numéro de dépôt: **94917711.7**

(22) Date de dépôt: **02.06.1994**

(51) Int Cl.⁶: **G21C 3/62**

(86) Numéro de dépôt international:
**PCT/FR94/00650**

**WO 94/29874 (22.12.1994 Gazette 1994/28)**

(54) **Combustible nucléaire retenant les produits de fission**

Spaltprodukte zurückhaltender Kernbrennstoff

Fission products retaining nuclear fuel

(84) Etats contractants désignés:
**BE DE ES GB SE**

(30) Priorité: **04.06.1993 FR 9306713**

(43) Date de publication de la demande:
**20.03.1996 Bulletin 1996/12**

(73) Titulaires:
• **COMMISSARIAT A L'ENERGIE ATOMIQUE**
**75015 Paris (FR)**
• **COMPAGNIE GENERALE DES MATIERES**
**NUCLEAIRES**
**F-78140 Velizy Villacoublay (FR)**
• **FRAMATOME**
**92400 Courbevoie (FR)**

(72) Inventeurs:
• **DEHAUDT, Philippe**
**F-38320 Eybens (FR)**
• **PERES, Véronique**
**F-26100 ROMANS (FR)**

(74) Mandataire: **Des Termes, Monique et al**
**Société Brevatome**
**25, rue de Ponthieu**
**75008 Paris (FR)**

(56) Documents cités:
| | |
|---|---|
| EP-A- 0 541 458 | DE-A- 1 962 764 |
| DE-A- 2 008 855 | FR-A- 2 070 027 |
| FR-A- 2 118 920 | GB-A- 1 228 654 |

## Description

La présente invention a pour objet des combustibles nucléaires à base de $UO_2$, $ThO_2$, et/ou $PuO_2$ ayant des propriétés améliorées de rétention des produits de fission.

Dans le cas des combustibles nucléaires à base d'oxyde, notamment d'oxyde d'uranium, l'un des problèmes posés par l'exploitation de ces combustibles résulte du relâchement des gaz de fission dans l'élément combustible au cours du fonctionnement du réacteur, car ces produits de fission doivent être maintenus dans l'élément, en particulier dans les pastilles de combustible elles-mêmes, pour limiter la pression interne des gaines et l'interaction des produits de fission avec ces gaines.

De ce fait, on limite actuellement le taux de combustion des éléments combustibles nucléaires à 50GWj/t d'U pour ne pas dépasser le seuil à partir duquel le relâchement des gaz de fission devient notable.

Cependant, les exploitants des réacteurs électronucléaires, en particulier des réacteurs à eau pressurisée (REP), souhaitent optimiser la gestion du combustible nucléaire en augmentant le taux de combustion (burn-up) des pastilles de bioxyde d'uranium contenues dans les crayons pour atteindre des valeurs minimales de 60 à 70 GWj/tU.

Les recherches poursuivies jusqu'à maintenant pour obtenir une telle amélioration, ont fait appel à des techniques d'augmentation de la taille des grains du bioxyde d'uranium car on a remarqué que la quantité de gaz relâchée par un combustible irradié à gros grains est inférieure à celle relâchée par un combustible irradié à petits grains. On a aussi utilisé des techniques de formation de précipités dans le combustible nucléaire pour ancrer les gaz de fission sur ces précipités.

Pour obtenir une augmentation de la taille des grains du bioxyde d'uranium, on peut ajouter des additifs tels que $TiO_2$, $Nb_2O_5$, $Cr_2O_3$, $Al_2O_3$, $V_2O_5$ et MgO à la poudre de bioxyde d'uranium soumise au frittage pour activer sa croissance cristalline, à condition de réaliser le frittage sous atmosphère d'hydrogène humide pour que la quantité d'oxyde ajoutée reste en solution dans le bioxyde d'uranium et ne soit pas réduite en élément métallique. L'utilisation de tels additifs pour obtenir une microstructure à gros grains est décrite par exemple par Killeen dans Journal of Nuclear Materials, 88, 1980, p. 177-184 ; Sawbridge et al.dans Report CEGB RD/B/N 4866, July 1980, et Radford et al., dans Scientific Paper 81-7D2-PTFOR-P2, 1981. Toutefois, l'utilisation de certains additifs de ce type peut conduire à une augmentation des coefficients de diffusion des cations et des gaz de fission dans le bioxyde d'uranium, ce qui est défavorable pour la rétention des produits de fission et ne permet pas de bénéficier totalement de la microstructure à gros grains.

Une autre technique d'amélioration du taux de rétention des combustibles nucléaires consiste à disperser dans les grains de bioxyde d'uranium des nanoprécipités d'une seconde phase permettant d'assurer l'ancrage des produits de fission sur cette seconde phase. Des nanoprécipités de ce type peuvent consister en des inclusions d'oxyde de magnésium comme il est décrit par Sawbridge et al., dans Journal of Nuclear Materials, 95, 1980, p. 119-128 et dans FR-A-2 026 251.

Selon la présente invention, cn utilise une autre technique différente de celles décrites ci-dessus pour améliorer le taux de rétention des produits de fission dans un combustible nucléaire. Cette technique consiste à piéger les atomes d'oxygène libérés par la fission des atomes d'uranium, et/ou de plutonium, de façon à maintenir la stoechiométrie O/U (Th, Pu) ou O/M avec M=U+Pu ou U+Th ou U+Pu+Th, du combustible à 2 et éviter ainsi un accroissement des coefficients de diffusion dans le combustible et une diminution de la conductibilité thermique de celui-ci.

En effet, l'accroissement des coefficients de diffusion est un mécanisme qui conduit à l'accumulation des produits de fission aux joints de grains, puis au relâchement des produits de fission. De même, une réduction de la conductibilité thermique du combustible est néfaste car elle a pour effet d'augmenter la température du combustible pour une même puissance linéique et, par voie de conséquence de réduire, d'une part, la solubilité des produits de fission, et de favoriser, d'autre part, leur diffusion.

Aussi, l'invention a pour objet un procédé pour améliorer la rétention des produits de fission au sein d'un combustible nucléaire céramique à base de $UO_2$, $ThO_2$ et/ou $PuO_2$, qui consiste à inclure dans le combustible nucléaire céramique, au moins un métal capable de piéger l'oxygène en formant un oxyde ayant une enthalpie libre de formation à la température T de fonctionnement du réacteur nucléaire inférieure à l'enthalpie libre de formation à la même température T, du (des) oxyde(s) surstoechiométrique(s) de formules $(U, Th)O_{2+x}$ et/ou $(U, Pu)O_{2+x}$ dans lesquelles x est tel que $0<x\leq0,01$.

L'utilisation d'un tel additif métallique permet ainsi de maintenir le rapport O/U (Th ou Pu) ou O/M défini ci-dessus du combustible nucléaire à une valeur de 2 et d'éviter ainsi un accroissement des coefficients de diffusion qui restent à une valeur faible, et une diminution de la conductibilité thermique du combustible. On obtient de ce fait un taux de rétention élevé des produits de fission.

Par ailleurs, cette technique peut être combinée avec les techniques connues de grossissement des arains de $UO_2$ et/ou de $PuO_2$ et/ou de $ThO_2$ et de formation de précipités pour ancrer les gaz de fission, ce qui est très intéressant et permet d'augmenter encore les performances du combustible.

Dans le cas des combustibles à base d'oxyde d'uranium $UO_2$, l'enthalpie libre de formation de l'oxyde surstoechiométrique $UO_{2+x}$ avec $0<x\leq0,01$ peut être exprimée en terme de potentiel d'oxygène et calculée d'après la loi de Lindemer et Besmann, comme il est décrit dans Journal of Nuclear Materials, 130, 1985, p. 473-488. Dans ce cas, comme il est indiqué à la page 480 de ce document, le potentiel d'oxygène $\Delta G(O_2)$ de l'oxyde surstoechiométrique défini ci-dessus peut être estimé en J/mol selon la formule suivante :

$$- 360\,000 + 214\,T + 4\,RTLn[2x(1-2x)/(1-4x)^2]$$

dans laquelle R est la constante molaire des gaz, T est la température en Kelvin et x est tel que défini ci-dessus.

Aussi, pour des combustibles à base d'oxyde d'uranium $UO_2$, le métal inclus dans le combustible doit pouvoir former un oxyde ayant un potentiel d'oxygène défini par la formule : $\Delta G(O_2)=RT\,Ln\,(pO_2)$ dans laquelle R est la constante molaire des gaz, T est la température de fonctionnement du réacteur et $p(O_2)$ est la pression partielle d'oxygène, inférieure ou égale à la valeur estimée ci-dessus pour $UO_{2+x}$ par la loi de Lindemer et Besmann.

A titre d'exemple de métaux susceptibles de convenir, on peut citer Cr, Mo, Ti, Nb et U.

Aussi, l'invention a également pour objet un matériau combustible pour réacteur nucléaire qui comprend une matière céramique à base de $UO_2$, $ThO_2$ et/ou $PuO_2$ dans laquelle est dispersé au moins un métal capable de piéger l'oxygène, présentant les caractéristiques données ci-dessus.

Selon l'invention, la matière céramique à base d'oxyde peut être constituée de $UO_2$, de $ThO_2$, de $PuO_2$ ou de leurs mélanges, d'oxyde mixte $UO_2$-$PuO_2$ ou $UO_2$-$ThO_2$, d'oxydes mixtes à base de $UO_2$ et d'autres oxydes tels que les oxydes de terres rares, ou d'oxydes mixtes à base de $PuO_2$.

De préférence, la matière céramique est à base de $UO_2$ et le métal dispersé est capable de former un oxyde ayant un potentiel d'oxygène inférieur au potentiel d'oxygène de $UO_{2+x}$ comme il est décrit ci-dessus.

Généralement, pour atteindre des taux de combustion de 60 $GWj.t^{-1}$, le métal dispersé représente 0,1 à 2 % en poids du matériau combustible.

De préférence, le métal est le chrome et il représente de 0,1 à 1% en poids, et mieux encore de 0,2 à 0,5% en poids, du matériau combustible.

Par ailleurs, le matériau combustible peut comprendre de plus des additifs tels que $TiO_2$, $Nb_2O_5$, $Cr_2O_3$, $Al_2O_3$, $V_2O_5$ et MgO, afin d'augmenter la taille des grains du combustible et/ou de favoriser l'ancrage des produits de fission, ainsi que d'autres additifs, par exemple $SiO_2$, pour améliorer d'autres propriétés.

Le matériau combustible de l'invention peut être préparé par des procédés classiques de frittage en ajoutant à la poudre de matière céramique à fritter le métal, soit sous forme métallique, soit sous forme d'oxyde ou de composé oxygéné.

Dans le premier cas, après mise en forme de la poudre par compression à froid, on réalise le frittage en atmosphère d'hydrogène sec, ayant par exemple une teneur en eau inférieure à 0,05% en volume, pour ne pas oxyder le métal.

Dans le second cas, si l'on veut obtenir simultanément un grossissement des grains de $UO_2$, $ThO_2$ et/ou $PuO_2$, on utilise une quantité d'oxyde ou de composé oxygéné dépassant ou non la limite de solubilité de l'oxyde ou du composé oxygéné dans $UO_2$, $ThO_2$ et/ou $PuO_2$ à la température de frittage, et après mise en forme de la poudre par compression à froid, on réalise le frittage sous hydrogène humide ou humidifié, ayant par exemple une teneur en eau supérieure à 1% en volume, pour conserver l'oxyde pendant le frittage et activer la croissance cristalline. Après le frittage, on soumet le matériau fritté à un traitement de réduction sous hydrogène sec, ayant par exemple une teneur en eau inférieure à 0,05% en volume, pour réduire l'oxyde ou le composé oxygéné en métal

Dans le second cas, cette façon d'opérer permet d'obtenir une microstructure à gros grains (diamètre >40 µm) avec :

- soit des précipités métalliques nanométriques intragranulaires (diamètre <100 nm) si la quantité d'oxyde ou de composé oxygéné ajoutée est inférieure à la limite de solubilité,
- soit des précipités métalliques nanométriques intragranulaires (diamètre <100 nm) et des précipités métalliques micrométriques (diamètre >0,3 µm) si la quantité d'oxyde ou de composé oxygéné ajoutée dépasse la limite de solubilité.

En revanche, si dans le second cas, on ne désire pas obtenir simultanément une structure à gros grains, après mise en forme de la poudre par compression à froid, on réalise le frittage sous atmosphère d'hydrogène sec, ayant par exemple une teneur en eau inférieure à 0,05% en volume, pour réduire simultanément l'oxyde ou le composé oxygéné en métal.

Dans ce cas, on obtient des précipités métalliques micrométriques intergranulaires (diamètre >0,3 µm).

Dans tous les cas, la mise en forme de la poudre par compression à froid, par exemple pour former des pastilles, peut être réalisée de façon classique par compression uniaxiale, par exemple sous des pressions de 200 à 700 MPa.

Pour le frittage, on utilise habituellement une température de 1600 à 1750°C.

Lorsqu'on réalise un traitement thermique complémentaire de réduction, celui-ci peut être effectué à des températures de 1300 à 1750°C.

La poudre de matière céramique comprenant l'additif métallique sous forme d'oxyde ou de composé oxygéné peut être préparé par mélange de poudres des constituants ou encore par des procédés d'atomisation-séchage à partir d'une barbotine contenant l'additif sous la forme de sel en solution, ou par coprécipitation d'un sel d'uranium et d'un sel de l'additif.

Le procédé de l'invention est donc très intéressant puisqu'il permet de profiter non seulement de la capacité de piégeage d'oxygène du métal ajouté, mais aussi des propriétés des oxydes métalliques pour activer la croissance cristalline de $UO_2$ et améliorer la rétention des produits de fission au sein du combustible.

D'autres caractéristiques et avantages de l'invention apparaitront mieux à la lecture des exemples suivants donnés bien entendu à titre illustratif et non limitatif en référence au dessin annexé sur lequel :

- les figures 1, 2 et 3 sont des diagrammes illustrant l'évolution des potentiels d'oxygène de divers composés oxygénés (en kJ/mol) en fonction de la température (en °C),
- la figure 4 est une micrographie d'un matériau combustible conforme à l'invention,
- la figure 5 est une micrographie illustrant le piégeage d'oxygène dans un matériau combustible conforme à l'invention,
- la figure 6 est une micrographie donnée à titre comparatif pour montrer la structure d'un matériau combustible conforme à l'art antérieur après une oxydation ménagée,
- la figure 7 est une micrographie d'un matériau combustible conforme à l'invention présentant une structure à petits grains, et
- la figure 8 est une micrographie d'un matériau combustible conforme à l'invention présentant une microstructure à gros grains.

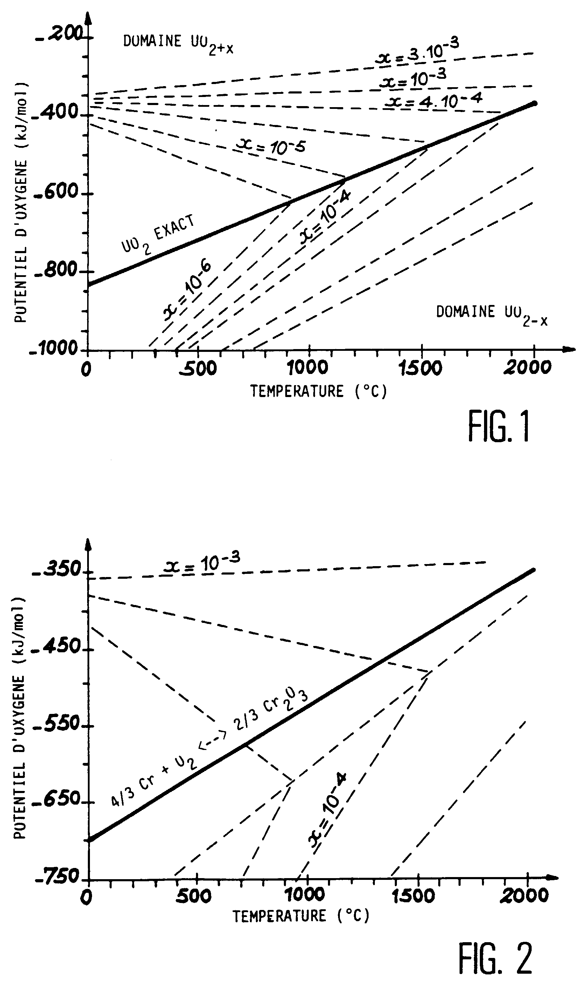

Sur la figure 1, on a représenté le potentiel d'oxygène (en kJ/mol) calculé d'après la formule de Lindemer et Besmann pour $UO_2$ ainsi que pour les oxydes surstoechiométriques $UO_{2+x}$ et les oxydes sous-stoechiométriques $UO_{2-x}$, en fonction de la température (°C).

Sur la figure 2, on a représenté l'évolution des potentiels d'oxygène (en kJ/mol) pour le couple $Cr/Cr_2O_3$ en fonction de la température (en °C) et on remarque que dans tout le domaine de températures considérées, le potentiel d'oxygène de cet oxyde est inférieur, en valeur absolue, à celui des oxydes surstoechiométriques $UO_{2+x}$ de la figure 1.

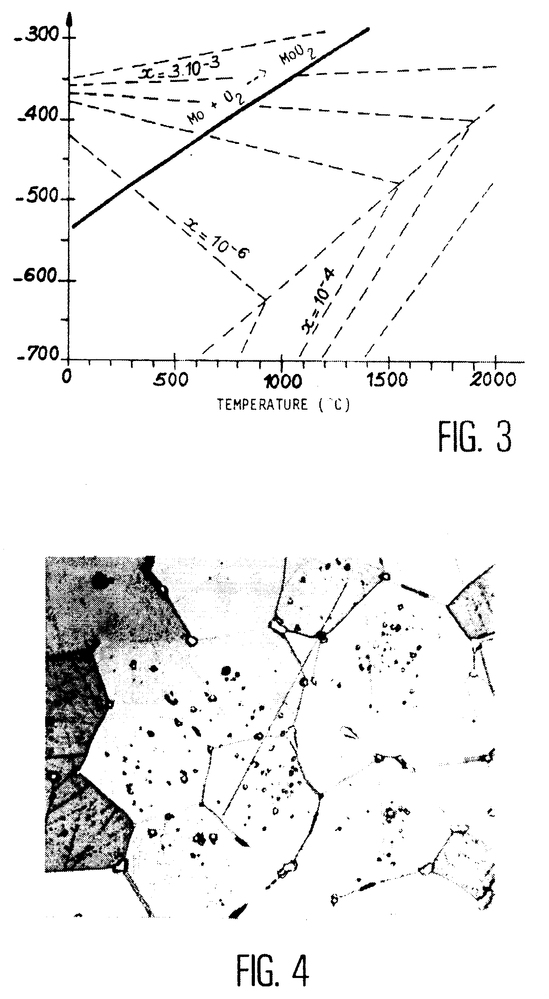

Sur la figure 3, on a représenté l'évolution du potentiel d'oxygène (en kJ/mol) pour $MoO_2$ en fonction de la température et l'on remarque également qu'il est toujours inférieure à celui des oxydes surstoechiométriques $UO_{2+x}$ aux mêmes températures.

Par conséquent, ces deux éléments Cr et Mo peuvent convenir comme métal capable de piéger l'oxygène pour des matériaux combustibles à base de $UO_2$ et les exemples suivants illustrent l'utilisation de ces deux éléments avec $UO_2$. Dans tous les exemples, on utilise une poudre de $UO_2$ ayant une granulométrie moyenne de 0,5 à 100 µm.

## Exemple 1.

Dans cet exemple, on prépare des pastilles de $UO_2$ comportant des précipités métalliques micrométriques de Cr.

On mélange par cobrassage 100g de poudre de $UO_2$ avec 0,1g de poudre de Cr métallique d'une granulométrie moyenne inférieure à 2µm, puis on met le mélange sous la forme de pastilles par compression uniaxiale à 350MPa avec lubrification de matrice dans une presse hydraulique. On place ensuite les pastilles dans une nacelle en molybdène et on les fritte à 1700°C pendant 4h sous hydrogène sec.

On obtient ainsi une microstructure à petits grains de $UO_2$ avec des précipités métalliques micrométriques de Cr.

La figure 4 est une micrographie illustrant cette structure à un grossissement de 600. Sur cette micrographie, on distingue nettement la présence de précipités métalliques inter ou intra granulaires (particules blanches) et le diagramme de diffraction électronique confirme le caractère métallique de ces inclusions.

Pour vérifier le comportement de ce combustible pour le piégeage d'oxygène, on réalise une oxydation ménagée des pastilles par traitement thermique à 700°C en atmosphère d'hélium comprenant 0,01 vol % d'oxygène, dans des conditions permettant d'atteindre dans le cas de l'oxyde pur, un rapport moyen O/U de 2,024.

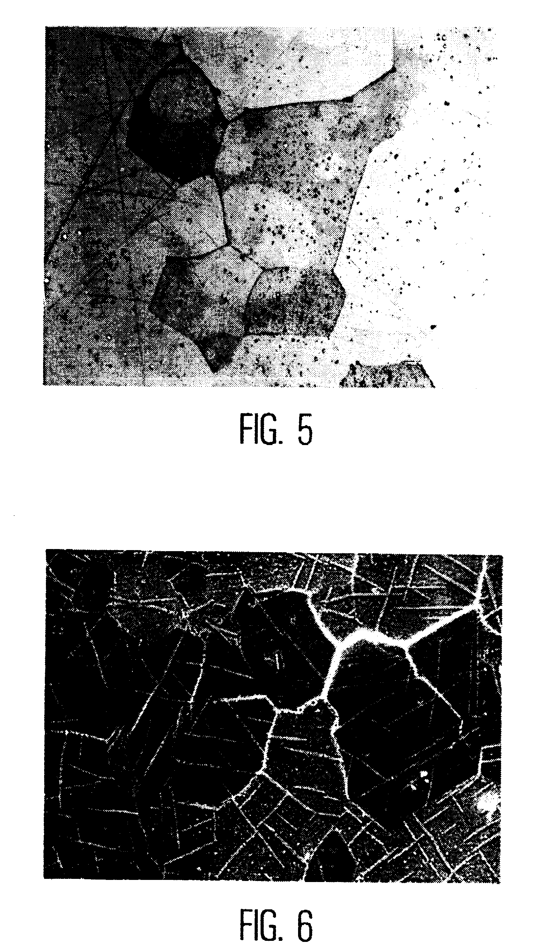

La figure 5 est une micrographie à un grossissement de 400 qui illustre la structure du matériau combustible ayant subi cette oxydation. Sur cette figure, on voit que le matériau combustible a piégé l'oxygène et ne comporte pas d'autres phases que la matrice $UO_2$ obtenue précédemment.

A titre comparatif, on a représenté sur la figure 6, la micrographie d'une pastille d'oxyde d'uranium obtenue dans les mêmes conditions que celles de l'exemple 1, mais sans addition de chrome, lorsque celle-ci a été soumise à la même oxydation ménagée pour atteindre le rapport moyen O/U de 2,024.

Sur cette figure 6, on remarque la présence d'aiguilles de $U_4O_9$ dans la matrice de $UO_2$.

Ainsi, en comparant les figures 5 et 6, on constate l'efficacité des inclusions métalliques de chrome qui ont empêché la transformation de l'oxyde d'uranium $UO_2$ en $U_4O_9$.

## Exemple 2.

Dans cet exemple, on prépare des pastilles de combustible nucléaire en bioxyde d'uranium ayant une microstructure à petits grains de $UO_2$ avec des précipités métalliques micrométriques de Cr.

Dans ce cas, on mélange par co-brassage 100g de poudre de $UO_2$ avec 0,15g de poudre de $Cr_2O_3$ (d'une granulométrie inférieure à 2µm), puis on forme des pastilles à partir du mélange et on les fritte comme dans l'exemple 1, sous atmosphère d'hydrogène sec.

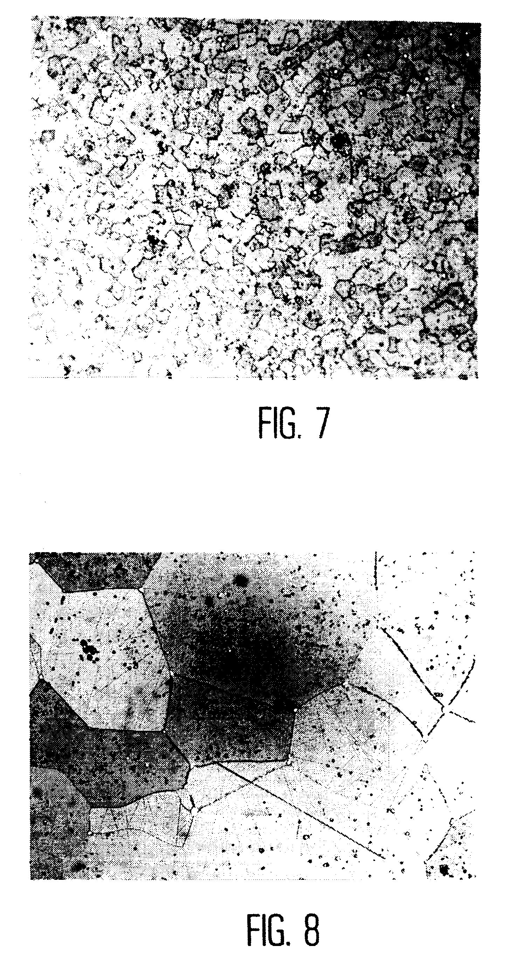

Dans ce cas, l'oxyde de chrome ajouté est réduit en chrome métallique lors du frittage sous hydrogène sec, et il n'a pu activer la croissance cristalline de $UO_2$ pour former une microstructure à gros grains. On obtient donc une microstructure à petits grains avec des précipités métalliques de Cr. La figure 7 représente cette structure.

## Exemple 3.

Dans cet exemple, on prépare un combustible nucléaire ayant une microstructure à petits grains de $UO_2$ avec des précipités métalliques de Cr.

Dans ce cas, on prépare une poudre par atomisation-séchage d'une barbotine contenant 150g de $UO_2$, 0,6g d'un sel soluble de chrome : $(NH_4)_2CrO_4$ et 250g d'eau distillée. On calcine ensuite la poudre obtenue, pendant 2h, dans une nacelle en alumine à 400°C dans un four à tube laboratoire en alumine sous un flux d'argon (300ml/min) pour transformer le sel de chrome en $Cr_2O_3$ On réalise ensuite la mise en forme de la poudre et le frittage comme dans l'exemple 1, sous atmosphère d'hydrogène sec.

Dans ce cas, le composé oxygéné du chrome est réduit lors du frittage en chrome métallique, ce qui ne lui permet pas de jouer le rôle d'activateur de la croissance cristalline de $UO_2$. On obtient donc une microstructure à petits grains de $UO_2$ avec des précipités métalliques de chrome.

## Exemple 4.

Dans cet exemple, on prépare un combustible nucléaire ayant une microstructure à gros grains de $UO_2$ avec des précipités métalliques, nanométriques et micrométriques de Cr.

On prépare une poudre par atomisation-séchage comme dans l'exemple 3, en utilisant 1,5g de $(NH_4)_2CrO_4$, c'est-à-dire une teneur en $Cr_2O_3$ supérieure à la limite de solubilité de $Cr_2O_3$ dans $UO_2$ à 1700°C. On traite la poudre obtenue comme dans l'exemple 3 en la calcinant 2h dans une nacelle en alumine à 400°C dans un four à tube laboratoire en alumine sous un flux d'argon (300ml/min), puis on la met sous la forme de pastilles par compression uniaxiale à 350MPa comme dans l'exemple 1. On réalise ensuite le frittage sous atmosphère d'hydrogène humidifié à 1,7 vol % d'eau, à 1700°C pendant 4h pour maintenir le chrome sous la forme d'oxyde et favoriser le grossissement des grains de $UO_2$.

Après frittage, on effectue un traitement de recuit à 1300°C, pendant 5h, sous hydrogène sec, ayant une teneur en eau inférieure à 0,05% en volume pour réduire l'oxyde $Cr_2O_3$ en chrome métallique.

Le maintien de $Cr_2O_3$ sous la forme d'oxyde pendant le frittage a permis de l'utiliser comme activateur de la croissance cristalline et d'obtenir ainsi une microstructure à gros grains, et le traitement de recuit sous hydrogène sec a permis de réduire ensuite $Cr_2O_3$ en chrome métallique et de conduire ainsi à des précipités métalliques nanométriques et micrométriques.

La microstructure du matériau obtenu dans ces conditions est illustrée sur la figure 8 sur laquelle on remarque les gros grains 1 de $UO_2$, et les inclusions micrométriques 5 de chrome. Les inclusions nanométriques de chrome sont mises en évidence par diffraction électronique.

## Exemple 5.

On prépare une poudre comme dans l'exemple 3 par atomisation-séchage mais en utilisant 0,2g de $(NH_4)_2CrO_4$, c'est-à-dire une teneur équivalente en $Cr_2O_3$ inférieure à la limite de solubilité de $Cr_2O_3$ dans $UO_2$ à 1700°C. On réalise ensuite la compression de la poudre sous la forme de pastilles et le frittage comme dans l'exemple 4 pour obtenir une microstructure à gros grains due au maintien du chrome sous forme d'oxyde. On effectue ensuite un traitement de recuit comme dans l'exemple 4 pour réduire $Cr_2O_3$ en chrome métallique.

Dans ce cas, on obtient une microstructure à gros grains de $UO_2$ avec des précipités métalliques nanométriques de Cr, car il n'y avait pas d'excès de $Cr_2O_3$ pour former, lors de la réduction, des précipités métalliques micrométriques.

## Exemple 6.

Dans cet exemple, on suit le même mode opératoire que dans l'exemple 4, mais on utilise 1,5g de $(NH_4)_2CrO_4$ et 0,04g de $SiO_2$ ultrafine dans la barbotine qui contient 150g de $UO_2$ et 250g d'eau distillée. La poudre obtenue par atomisation-séchage est comprimée sous la forme de pastilles, puis frittée en atmosphère d'hydrogène humidifié et soumise à un traitement de recuit sous hydrogène sec, dans les mêmes conditions que celles de l'exemple 4. On obtient ainsi une microstructure à gros grains de $UO_2$ avec des précipités métalliques de chrome et une phase silice aux joints de grains.

## Exemple 7.

Dans cet exemple, on prépare par cobroyage, dans une jarre à boulets d'uranium métal, un mélange de 100g de $UO_2$ et 0,6g de $MoO_3$, puis on comprime le mélange de poudres sous la forme de pastilles et on le fritte dans les mêmes conditions que celles de l'exemple 1.

Dans ce cas, l'oxyde de molybdène est réduit en molybdène lors du frittage et ne peut pas activer la croissance cristalline des grains de $UO_2$. On obtient donc une microstructure à petits grains de $UO_2$ avec des précipités métalliques micrométriques de Mo.

## Exemple 8.

On prépare une poudre par atomisation-séchage d'une suspension aqueuse composée de 150g de $UO_2$

et de 7,7g d'heptamolybdate d'ammonium $(NH_4)_6Mo_7O_{24}$, $4H_2O$ et de 250 g d'eau distillée. On traite ensuite la poudre comme dans l'exemple 1.

On obtient ainsi une microstructure à petits grains de $UO_2$ avec des précipités métalliques micrométriques de Mo.

## Revendications

1. Procédé pour améliorer la rétention des produits de fission au sein d'un combustible nucléaire céramique à base de $UO_2$, $ThO_2$ et/ou $PuO_2$, caractérisé en ce qu'il consiste à inclure dans le combustible céramique au moins un métal capable de piéger l'oxygène en formant un oxyde ayant une enthalpie libre de formation à la température T de fonctionnement du réacteur nucléaire, inférieure ou égale à l'enthalpie libre de formation à la même température T du (des) oxyde(s) surstoechiométrique(s) de formules $(U, Th) O_{2+x}$ et/ou $(U, Pu)O_{2+x}$ dans lesquelles x est tel que $0<x\leq0,01$.

2. Procédé selon la revendication 1, caractérisé en ce que le combustible nucléaire est à base d'oxyde d'uranium $UO_2$, et en ce que le métal est capable de former un oxyde possédant un potentiel d'oxygène défini par la formule :

$$\Delta G(O_2) = RTLn (pO_2)$$

dans laquelle R est la constante molaire des gaz, T est la température en Kelvin de fonctionnement du réacteur nucléaire, et $pO_2$ est la pression partielle d'oxygène, inférieur ou égal au potentiel d'oxygène de $UO_{2+x}$ avec $0<x\leq0,01$ à la même température T, soit inférieur ou égal à :

$$- 360\ 000 + 214\ T + 4\ RTLn\ [2x(1-2x)/(1-4x)^2]$$

avec R, T et x ayant les significations données ci-dessus.

3. Procédé selon l'une quelconque des revendications 1 et 2, caractérisé en ce que le métal est choisi parmi Cr, Mo, Ti, Nb et U.

4. Matériau combustible pour réacteur nucléaire, caractérisé en ce qu'il comprend une matière céramique à base de $UO_2$, $ThO_2$ et/ou $PuO_2$ dans laquelle est dispersé au moins un métal capable de piéger l'oxygène pour former un oxyde dont l'enthalpie libre de formation est inférieure ou égale à l'enthalpie libre de formation de l'oxyde surstoechiométrique $(U, Th)O_{2+x}$ et/ou $(u,Pu)O_{2+x}$ avec x tel que $0<x\leq0,01$ à la température T atteinte dans le réacteur nucléaire.

5. Matériau selon la revendication 4, caractérisé en ce que le métal est capable de former un oxyde ayant un potentiel d'oxygène défini par la formule :

$$\Delta G(O_2) = RTLn (pO_2)$$

dans laquelle R est la constante molaire des gaz, T est la température en Kelvin atteinte dans le réacteur nucléaire et $pO_2$ est la pression partielle d'oxygène, inférieur ou égal à

$$- 360\ 000 + 214\ T + 4\ RTLn\ [2x(1-2x)/(1-4x)^2]$$

dans laquelle R et T ont les significations données ci-dessus et x est tel que $0<x\leq0,01$.

6. Matériau selon l'une quelconque des revendications 4 et 5, caractérisé en ce que le métal est choisi parmi Cr, Mo, Ti, Nb et U.

7. Matériau selon la revendication 6, caractérisé en ce que le métal est Cr et en ce que la teneur en Cr du matériau combustible est de 0,1 à 1% en poids.

8. Matériau selon la revendication 7, caractérisé en ce que la teneur en chrome est de 0,2 à 0,5% en poids.

9. Matériau selon l'une quelconque des revendications 4 à 8, caractérisé en ce que la matière céramique est un oxyde mixte $UO_2$- oxyde de terre rare.

10. Procédé de préparation d'un matériau combustible nucléaire selon l'une quelconque des revendications 4 à 9, caractérisé en ce que l'on prépare une poudre de matière céramique contenant le métal capable de piéger l'oxygène, on met en forme le mélange par compression à froid et on fritte la poudre ainsi mis en forme sous atmosphère d'hydrogène sec.

11. Procédé de préparation d'un matériau combustible nucléaire selon l'une quelconque des revendications 4 à 9, caractérisé en ce que l'on prépare une poudre de la matière céramique contenant un oxyde ou un composé oxygéné du métal capable de piéger l'oxygène, on met en forme la poudre par compression à froid, puis on fritte la poudre sous atmosphère d'hydrogène humide pour conserver l'oxyde ou le composé oxygéné, et on réalise ensuite un traitement thermique de réduction, sous atmosphère d'hydrogène sec, pour réduire en métal l'oxyde ou le composé oxygéné.

12. Procédé de préparation d'un matériau combustible nucléaire selon l'une quelconque des revendications 4 à 9, caractérisé en ce que l'on prépare une poudre de la matière céramique contenant un oxyde ou un composé oxygéné du métal capable de piéger l'oxygène, on met en forme la poudre par compression à froid, puis on la fritte sous atmosphère d'hydrogène sec pour réduire simultanément l'oxyde ou le composé oxygéné en métal.

13. Procédé selon l'une quelconque des revendications 10 à 12, caractérisé en ce que la poudre de matière céramique est une poudre de $UO_2$.

14. Procédé selon la revendication 13, caractérisé en ce que l'on réalise le frittage à une température de 1600 à 1750°C.

15. Procédé selon la revendication 11, caractérisé en ce que l'on réalise le traitement thermique à une température de 1300 à 1750°C.

16. Procédé selon l'une quelconque des revendications 11 à 15, caractérisé en ce que le composé oxygéné du métal est du chromate d'ammonium ou de l'heptamolybdate d'ammonium.

**Patentansprüche**

1. Verfahren zum Verbessern der Zurückhaltung der Spaltprodukte im Innern eines keramischen Kernbrennstoffs auf der Basis von $UO_2$, $ThO_2$ und/oder $PuO_2$,
   **dadurch gekennzeichnet,** daß es darin besteht, in den keramischen Brennstoff wenigstens ein Metall einzuschließen, das fähig ist, den Sauerstoff einzufangen bzw. aufzunehmen, indem es ein Oxid bildet, das bei der Betriebstemperatur T des Kernreaktors eine freie Bildungsenthalpie kleiner oder gleich der freien Bildungsenthalpie des (der) überstöchiometrischen Oxids (Oxide) der Formeln (U, Th)$O_{2+x}$ und/oder (U, Pu)$O_{2+x}$ aufweist, in denen x z.B. $0<x\leq0,01$ ist.

2. Verfahren nach Anspruch 1, dadurch gekennzeichnet, daß der Kernbrennstoff auf Uraniumoxid $UO_2$ basiert, und dadurch, daß das Metall fähig ist, ein Oxid zu bilden, das ein Sauerstoffpotential besitzt, das definiert wird durch die Formel:

$$\Delta G(O_2) = RTLn(pO_2)$$

in der R die molare Konstante bzw. Molkonstante der Gase ist, T die Betriebstemperatur des Kernreaktors in Kelvin ist und $pO_2$ der Sauerstoff-Partialdruck ist, kleiner oder gleich dem Sauerstoffpotential von $UO_{2+x}$ mit $0<x\leq0,01$ bei derselben Temperatur, also kleiner oder gleich:

$$- 360\ 000 + 214\ T + RTLn\ [2x(1-2x)/(1-4x)^2]$$

wobei R, T und x die oben angegebenen Bedeutungen haben.

3. Verfahren nach einem der Ansprüche 1 und 2, dadurch gekennzeichnet, daß das Metall ausgewählt wird unter Cr, Mo, Ti, Nb und U.

4. Brennmaterial für Kernreaktor, dadurch gekennzeichnet, daß es ein keramisches Material auf der Basis von $UO_2$, $ThO_2$ und/oder $PuO_2$ umfaßt, in dem wenigstens ein Metall dispergiert ist, das fähig ist, den Sauerstoff einzufangen bzw. aufzunehmen, um ein Oxid zu bilden, dessen freie Bildungsenthalpie kleiner oder gleich der freien Bildungsenthalpie des überstöchiometrischen Oxids (U, Th)$O_{2+x}$ und/oder (U, Pu)$O_{2+x}$ mit x z.B. $0<x\leq0,01$ bei der in dem Kernreaktor erreichten Temperatur T ist.

5. Material nach Anspruch 4, dadurch gekennzeichnet, daß das Metall fähig ist, ein Oxid mit einem Sauerstoffpotential zu bilden, das definiert wird durch die Formel:

$$\Delta G(O_2) = RTLn\ (pO_2)$$

in der R die molare Konstante bzw. Molkonstante der Gase ist, T die in dem Kernreaktors erreichte Temperatur in Kelvin ist und $pO_2$ der Sauerstoff-Partialdruck ist, kleiner oder gleich

$$- 360\ 000 + 214\ T + RTLn\ [2x(1-2x)/(1-4x)^2]$$

wobei R, T und x die oben angegebenen Bedeutungen haben und x z.B. $0<x\leq0,01$ ist.

6. Material nach einem der Ansprüche 4 und 5, dadurch gekennzeichnet, daß das Metall ausgewählt wird unter Cr, Mo, Ti, Nb und U.

7. Material nach Anspruch 6, dadurch gekennzeichnet, daß das Metall Cr ist, und dadurch, daß der Cr-Gehalt des brennbaren Materials 0,1 bis 1 Gewichtsanteil in % beträgt.

8. Material nach Anspruch 7, dadurch gekennzeichnet, daß der Chromgehalt 0,2 bis 0,5 Gewichtsanteil in % beträgt.

9. Material nach einem der Ansprüche 4 bis 8, dadurch gekennzeichnet, daß das keramische Material ein Mischoxid aus $UO_2$ und einem Seltene-Er-

den-Oxid ist.

10. Herstellungsverfahren eines Kernbrennstoffmaterials nach einem der Ansprüche 4 bis 9, dadurch gekennzeichnet, daß man ein Pulver aus keramischem Material herstellt, welches das Metall enthält, das den Sauerstoff einfangen bzw. aufnehmen kann, und man die Mischung kalt unter Druck formt und das derart geformte Pulver unter trockener Wasserstoffatmosphäre sintert.

11. Herstellungsverfahren eines Kernbrennstoffmaterials nach einem der Ansprüche 4 bis 9, dadurch gekennzeichnet, daß man ein Pulver aus keramischem Material herstellt, ein Oxid oder eine sauerstoffhaltige Verbindung des Metalls enthaltend, fähig den Sauerstoff einzufangen bzw. aufzunehmen, man das Pulver kalt unter Druck formt, man dann das Pulver unter feuchter Wasserstoffatmosphäre sintert, um das Oxid und die sauerstoffhaltige Verbindung zu behalten, und man anschließend eine Reduktionswärmebehandlung unter trockener wasserstoffhaltiger Atmosphäre durchführt, um das Oxid oder die sauerstoffhaltige Verbindung zu Metall zu reduzieren.

12. Herstellungsverfahren eines Kernbrennstoffmaterials nach einem der Ansprüche 4 bis 9, dadurch gekennzeichnet, daß man ein Pulver aus keramischem Material herstellt, ein Oxid oder eine sauerstoffhaltige Verbindung des Metalls enthaltend, fähig den Sauerstoff einzufangen bzw. aufzunehmen, man das Pulver kalt unter Druck formt, man dann das Pulver unter trockener Wasserstoffatmosphäre sintert, um simultan das Oxid oder die sauerstoffhaltige Verbindung zu Metall zu reduzieren.

13. Verfahren nach einem der Ansprüche 10 bis 12, dadurch gekennzeichnet, daß das Pulver aus keramischem Material ein $UO_2$-Pulver ist.

14. Verfahren nach Anspruch 13, dadurch gekennzeichnet, daß man das Sintern bei einer Temperatur von 1600 bis 1750°C durchführt.

15. Verfahren nach Anspruch 11, dadurch gekennzeichnet, daß man die Wärmebehandlung bei einer Temperatur von 1300 bis 1750°C durchführt.

16. Verfahren nach einem der Ansprüche 11 bis 15, dadurch gekennzeichnet, daß die sauerstoffhaltige Metallverbindung Ammoniumchromat oder Ammoniumheptamolybdat ist.

**Claims**

1. Process for improving the retention of fission products within a ceramic nuclear fuel based on $UO_2$, $ThO_2$ and/or $PuO_2$, characterized in that it consists of including in the ceramic fuel at least one metal able to trap the oxygen by forming an oxide having a free formation enthalpy at the operating temperature T of the nuclear reactor, which is equal to or below that of the free formation enthalpy at the same temperature T of the superstoichiometric oxide or oxides of formula (U, Th) $O_{2+x}$ and/or (U, Pu) $O_{2+x}$, in which x is such that $0<x≤0.01$.

2. Process according to claim 1, characterized in that the nuclear fuel is based on uranium dioxide $UO_2$, and in than the metal is able to form an oxide having an oxygen potential defined by the formula:

$$\Delta G(O_2) = RTLn(pO_2)$$

in which R is the molar constant of the gases, T is the nuclear reactor operating temperature in Kelvins and $pO_2$ is the partial oxygen pressure, equal to or below the oxygen potential of $UO_{2+x}$ with $0 < x \leq 0.01$ at the same temperature T, either below or equal to:

$$- 360\ 000 + 214\ T + 4\ RTLn\ [2x(1\text{-}2x)/(1\text{-}4x)^2]$$

with R, T and x having the meanings given hereinbefore.

3. Process according to either of the claims 1 and 2, characterized in that the metal is chosen from Cr, Mo, Ti, Nb and U

4. Fuel material for a nuclear reactor, characterized in that it comprises a ceramic material based on $UO_2$, $ThO_2$ and/or $PuO_2$ in which is dispersed at least one metal able to trap oxygen for forming an oxide, whose free formation enthalpy is equal to or below the free formation enthalpy of the superstoichiometric oxide (U, Th)$O_{2+x}$ and/or (U, Pu)$O_{2+x}$ with x such that $0<x≤0.1$ at the temperature T reached in the nuclear reactor.

5. Material according to claim 4, characterized in that the metal is able to form an oxide having an oxygen potential defined by the formula:

$$\Delta G(O_2) = RTLn\ (pO_2)$$

in which R is the molar constant of the gases, T is the nuclear reactor temperature in Kelvins and $pO_2$ is the partial oxygen pressure equal to or below

$$360\,000 + 214\,T + 4\,RTLn\,[2x(1-2x)/(1-4x)^2]$$

in which R and T have the meanings given hereinbefore and x is such that $0 < x \leq 0.01$.

6. Material according to either of the claims 4 and 5, characterized in that the metal is chosen from among Cr, Mo, Ti, Nb and U.

7. Material according to claim 6, characterized in that the metal is Cr and in that the Cr content of the fuel material is 0.1 to 1% by weight.

8. Material according to claim 7, characterized in that the chromium content is 0.2 to 0.5% by weight.

9. Material according to any one of the claims 4 to 8, characterized in that the ceramic material is a mixed oxide of $UO_2$ and rare earth oxide.

10. Process for the preparation of a nuclear fuel material according to any one of the claims 4 to 9, characterized in that preparation takes place of a ceramic material powder containing the metal able to trap the oxygen, the mixture is shaped by cold compression and the thus shaped powder is sintered under a dry hydrogen atmosphere.

11. Process for the preparation of a nuclear fuel material according to any one of the claims 4 to 9, characterized in that preparation takes place of a powder of the ceramic material containing an oxide or an oxygenated compound of the metal able to trap the oxygen, the powder is shaped by cold compression, the powder is sintered under a wet hydrogen atmosphere in order to conserve the oxide or oxygenated compound and this is followed by a thermal reduction treatment under a dry hydrogen atmosphere for reducing the oxide or oxygenated compound into metal.

12. Process for the preparation of a nuclear fuel material according to any one of the claims 4 to 9, characterized in that preparation takes place of a ceramic material powder containing an oxide or an oxygenated compound of the metal able to trap oxygen, the powder is shaped by cold compression and is then sintered under a dry hydrogen atmosphere to simultaneously reduce the oxide or oxygenated compound into metal.

13. Process according to any one of the claims 10 to 12, characterized in that the ceramic material powder is a $UO_2$ powder.

14. Process according to claim 13, characterized in that sintering takes place at a temperature of 1600 to 1750°C.

15. Process according to claim 11, characterized in that the heat treatment takes place at a temperature of 1300 to 1750°C

16. Process according to any one of the claims 11 to 15, characterized in that the oxygenated compound of the metal is an ammonium chromate or ammonium heptamolybdate.

FIG. 1

FIG. 2

FIG. 3

FIG. 4

FIG. 5

FIG. 6

FIG. 7

FIG. 8